# EUROPÄISCHE PATENTSCHRIFT

(11) **EP 4 025 447 B1**
(45) Veröffentlichungstag und Bekanntmachung des Hinweises auf die Patenterteilung: **27.09.2023**
(21) Anmeldenummer: 20760372.1
(22) Anmeldetag: 12.08.2020
(51) Int. Cl.: B60K 15/067, B60K 15/07

(54) **BEFESTIGUNGSSYSTEM FÜR EINEN KRYOBEHÄLTER MIT EINEM AUS DEM BEHÄLTERMANTEL RAGENDEN ANSCHLUSS**
FASTENING SYSTEM FOR A CRYOGENIC CONTAINER HAVING A CONNECTION PROTRUDING OUT OF THE CONTAINER SHELL
SYSTÈME DE FIXATION POUR RÉCIPIENT CRYOGÉNIQUE DOTÉ D'UN RACCORDEMENT FAISANT SAILLIE HORS DE L'ENVELOPPE DU RÉCIPIENT

(30) Priorität: 05.09.2019 AT 5016119 U
(43) Veröffentlichungstag der Anmeldung: 13.07.2022
(73) Patentinhaber: Cryoshelter GmbH, 8143 Dobl-Zwaring (AT)
(72) Erfinder: REBERNIK, Matthias, 8143 Dobl-Zwaring (AT)
(74) Vertreter: Gruber, Philipp
(86) Internationale Anmeldenummer: PCT/AT2020/060300
(87) Internationale Veröffentlichungsnummer: WO 2021/042143

(56) Entgegenhaltungen:
- EP-A1- 3 121 051
- EP-A1- 3 121 505
- DE-A1-102017 005 448
- US-A1- 2009 114 467
- US-B1- 6 412 588

## Beschreibung

Die Erfindung betrifft ein Befestigungssystem für einen Kryobehälter, welcher einen zylindrischen Mantel und zumindest einen aus dem Mantel ragenden Anschluss umfasst, wobei das Befestigungssystem zumindest ein Spannband umfasst, um den Kryobehälter an einen Fahrzeugrahmen zu spannen.

Aus dem Stand der Technik ist bekannt, auf einem Kraftfahrzeug einen oder mehrere Kryobehälter zu montieren, in denen verflüssigtes Gas (z.B. LNG, "Liquid Natural Gas") gespeichert ist, welches beispielsweise als Kraftstoff für das Kraftfahrzeug verwendet wird. Die Kryobehälter werden üblicherweise links und rechts am Tragrahmen des Fahrzeugs zwischen den Achsen des Fahrzeugs montiert.

Um einen Kryobehälter am Fahrzeug zu montieren, wird dieser beispielsweise auf am Fahrzeug montierte L-förmige Konsolen gelegt und mittels Spannbändern an den Konsolen festgespannt. Herausforderungen stellen jedoch Kryobehälter dar, bei denen Anschlüsse aus dem Mantel ragen oder sonstige Instrumente wie Wärmetauscher entlang des Mantels angeordnet sind. In derartigen Fällen können die Spannbänder nicht einfach um den Mantel des Kryobehälters gelegt werden, da die Spannbänder über den Anschlüssen bzw. Instrumenten liegen würden.

Selbst wenn die Spannbänder an Positionen um den Kryobehälter gelegt werden, an denen keine Anschlüsse aus dem Mantel ragen, müssen diese in der Regel unter Rohrleitungen oder Armaturen hindurchgeführt werden. Die Anbringung des Kryobehälters am Kraftfahrzeug ist daher äußerst mühsam. Ein weiteres Problem ergibt sich durch die Druckstellen der Spannbänder am Kryobehälter, denn diese werden in der Regel als Doppelwandbehälter mit Innentank und Außenbehälter ausgeführt. Um den Kryobehälter stabil genug gegen die punktuellen Belastungen der Spannbänder auszubilden, muss der Außenbehälter eine ausreichend dicke Wandstärke aufweisen.

Eine alternative Befestigung eines Kryobehälters ist in der Schrift EP 3 121 505 B1 beschrieben. Hierbei wird eine verkleidende Abdeckung auf den Mantel des Kryobehälters gelegt, welche die Anschlüsse und Instrumente zwischen der Abdeckung und dem Mantel des Kryobehälters einschließt. Dadurch können die Spannbänder auch in jenen Bereichen über den Mantel bzw. über die Abdeckung gelegt werden, in denen sich üblicherweise die Anschlüsse bzw. Instrumente befinden.

Die Lösung der Ausführungsform mit verkleidender Abdeckung hat jedoch Nachteile, da die Abdeckung derart steif ausgebildet werden muss, dass sie dem Druck der Spannbänder standhalten kann. Weiters ergibt sich durch die Abdeckung ein erhöhter Platzbedarf, da üblicherweise auch Raum neben bzw. über den Anschlüssen bzw. Instrumenten abgedeckt wird, der nicht von den Spannbändern übergriffen wird.

Es ist daher das Ziel der Erfindung, ein Befestigungssystem für Kryobehälter zu schaffen, welches die Nachteile des Standes der Technik überwindet. Insbesondere soll ein Befestigungssystem mit geringem Raumbedarf und höherer Flexibilität erzielt werden.

Dieses Ziel wird durch ein Befestigungssystem für einen Kryobehälter geschaffen, welcher einen zylindrischen Mantel umfasst, wobei das Befestigungssystem zumindest ein Spannband umfasst, um den Kryobehälter an einen Fahrzeugrahmen zu spannen, wobei das Befestigungssystem eine Zwischenplatte umfasst, wobei ein erstes Spannband an einer ersten Seite der Zwischenplatte angebracht ist und ein zweites Spannband an einer der ersten Seite gegenüberliegenden zweiten Seite der Zwischenplatte angebracht ist, und wobei der Zwischenplatte gegenüberliegende Enden des ersten und des zweiten Spannbands jeweils mit dem Fahrzeugrahmen verbindbar sind, um den Kryobehälter an den Fahrzeugrahmen zu spannen.

Die Zwischenplatte bringt den Vorteil mit sich, dass die Kraftverteilung bei der Lagerung des Kryobehälters am Kraftfahrzeug oder dergleichen verbessert wird. Die Kraftverteilung erfolgt bei der erfindungsgemäßen Lösung flächig über die Zwischenplatte und nicht mehr punktuell entlang des Umfangs. Bevorzugt liegt die Zwischenplatte im Wesentlichen mit ihrer gesamten Fläche flächig auf einem Abschnitt des Mantels des Kryobehälters auf.

In manchen Ausführungsformen befinden sich Leitungen bzw. Armaturen über dem Mantel. Bevorzugt ist somit in derartigen Fällen, wenn sich die Zwischenplatte zumindest teilweise unter einer an den Kryobehälter angeschlossenen Leitung oder Armatur befindet. Die Lösung mit der Zwischenplatte unter der an den Kryobehälter angeschlossenen Leitung bzw. Armatur ermöglicht, dass die Spannbänder bei der Befestigung des Kryobehälters am Kraftfahrzeug nicht mühsam unter der Leitung bzw. Armatur hindurchgefädelt werden muss. Beispielsweise kann die Zwischenplatte bereits bei der Herstellung des Kryobehälters unter der bzw. den Leitungen und/oder Armaturen am Kryobehälter montiert werden, wodurch beim Schritt der Befestigung des Kryobehälters am Kraftfahrzeug nur mehr die Spannbänder mit der Zwischenplatte verbunden werden müssen.

In allen Ausführungsformen wird durch die Zwischenplatte das weitere Problem gelöst, dass in der Nähe der Spannbänder gemäß dem Stand der Technik häufig Leitungen wie eine Befüllleitung liegen, die sehr geringe Temperaturen aufweisen. Die Spannbänder wurden daher aus einem temperaturbeständigen Material wie Edelstahl gefertigt. Bei der erfindungsgemäßen Lösung können die Spannbänder aus einem anderen Material als die Zwischenplatte gefertigt werden. Die Spannbänder müssen daher nicht aus einem Material gefertigt werden, welches bei Kryotemperaturen im Wesentlichen gleichbleibende Materialeigenschaften aufweist. Beispielsweise kann die Zwischenplatte aus Edelstahl gefertigt werden und die Spannbänder aus Kunststoff.

In einer besonders bevorzugten Ausführungsform umfasst der Kryobehälter zumindest einen aus dem Mantel ragenden Anschluss und die Zwischenplatte weist zumindest eine Ausnehmung für den zumindest einen Anschluss auf. Diese Ausführungsform hat den Vorteil, dass durch die Zwischenplatte eine Möglichkeit geschaffen wird, Spannbänder an jenen Stellen um den Mantel des Kryobehälters zu führen, die üblicherweise durch Anschlüsse oder Instrumente blockiert sind, ohne die Spannbänder dabei "über" die Anschlüsse bzw. Instrumente führen zu müssen. Die Zwischenplatte erlaubt durch die zumindest eine Ausnehmung, dass eine Aussparung für die Durchführung des Anschlusses durch den Mantel erzielt wird.

Weiterhin kann eine Abdeckung über die Anschlüsse bzw. Instrumente gelegt werden, die erfindungsgemäß jedoch nicht derart steif ausgebildet sein muss, dass sie dem Druck der Spannbänder standhält. Insgesamt wird auch in der Ausführungsform mit Zwischenplatte und darüber liegender Abdeckung auch ein Raumgewinn gegenüber der Stand-der-Technik Ausführungsform mit Spannbändern über der Abdeckung erzielt, da die Spannbänder zumindest nicht mehr über die Abdeckung ragen.

Bevorzugt wird vorgesehen, dass erste und zweite Spannbänder symmetrisch an der Zwischenplatte angebracht sind, d.h. das erste Spannband ist an der Zwischenplatte in Umfangsrichtung des Mantels im Wesentlichen gegenüber dem zweiten Spannband angebracht. Durch diese Lösung kann das erste Spannband durch das zweite Spannband "weitergeführt" werden, wodurch eine besonders günstige Kraftverteilung vorliegt.

Vorteilhaft ist weiters, wenn zumindest zwei erste Spannbänder an der ersten Seite angebracht sind und zumindest zwei zweite Spannbänder an der zweiten Seite angebracht sind. Durch das Vorsehen von mehreren ersten bzw. zweiten Spannbändern wird erzielt, dass der Kryobehälter stabiler am Fahrzeug montiert werden kann. Dadurch kann insbesondere vorgesehen werden, dass alle ersten und zweiten Spannbänder an einer einzigen Zwischenplatte angebracht sind. Alternativ könnte genau ein erstes Spannband und genau ein zweites Spannband an der Zwischenplatte angebracht sein, um diese so klein wie möglich zu gestalten, wodurch Gewicht und Raum eingespart wird.

Auch in dieser Ausführungsform wird bevorzugt, wenn zumindest einige, bevorzugt alle, erste und zweite Spannbänder symmetrisch zueinander angeordnet sind, d.h. wenn zumindest zwei erste Spannbänder an der ersten Seite angebracht sind und zumindest zwei zweite Spannbänder an der zweiten Seite angebracht sind, wobei bevorzugt jeweils ein erstes Spannband an der Zwischenplatte in Umfangsrichtung des Mantels gegenüber einem zweiten Spannband angebracht ist.

Vorteilhaft ist, wenn zumindest eine der Ausnehmungen in der Zwischenplatte zwischen dem ersten Spannband und dem dem ersten Spannband gegenüberliegendem zweiten Spannband angeordnet ist. Grundsätzlich können die Ausnehmungen in der Zwischenplatte jedoch frei angeordnet werden und flexibel an die am Behältermantel angeordneten Anschlüsse und Instrumente angepasst werden.

Besonders bevorzugt sind die Spannbänder aus Edelstahl gefertigt. Edelstahl hat die Eigenschaft, dass es bei kryogenen Temperaturen weiterhin die erforderlichen Festigkeits- und Belastbarkeitswerte aufweist, sodass es in der Regel zu keinen negativen Effekten durch die Nähe zu tiefkalt durchströmten Leitungen kommt.

In einer ersten bevorzugten Ausführungsform ist das erste Spannband unlösbar an der ersten Seite der Zwischenplatte angebracht. Dies hat den Vorteil, dass die Position der Spannbänder nicht frei gewählt werden muss und eine optimale Positionierung der Spannbänder bereits bei der Herstellung des Befestigungssystems eingestellt werden kann.

In einer dazu alternativen Ausführungsform können die Spannbänder auch lösbar an der Zwischenplatte angebracht sein. Um dies umzusetzen, kann die Zwischenplatte entlang der ersten Seite eine Nut aufweisen, in welcher das erste Spannband eingehängt ist, wobei die Zwischenplatte bevorzugt an der zweiten Seite eine weitere Nut aufweist, in welcher das zweite Spannband eingehängt ist. Dadurch kann die Position der Anbringung der Spannbänder an der Zwischenplatte frei gewählt werden, was beispielsweise dann von Vorteil ist, wenn bei der Herstellung des Befestigungssystems noch nicht bekannt ist, an welcher Stelle die der Zwischenplatte abgewandten Enden der Spannbänder am Fahrzeug angebracht werden.

In der genannten Ausführungsform ist das erste Spannband bevorzugt mittels einer Befestigungsschraube in der Nut eingehängt, wodurch eine effiziente Anbringung erzielt werden kann.

In einer weiteren Ausführungsform wird für jedes Paar aus erstem und zweitem Spannband eine eigene Zwischenplatte vorgesehen, die beispielsweise so klein wie möglich gestaltet werden kann. In dieser Ausführungsform kann die Zwischenplatte beispielsweise auch als Ring ausgebildet sein, durch welchen der Anschluss hindurchtritt.

Um in der genannten Ausführungsform eine angemessene Stabilität für den Kryobehälter am Fahrzeug zu erzielen, werden zumindest zwei Zwischenplatten vorgesehen. Somit weist das Befestigungssystem zumindest eine weitere Zwischenplatte auf, wobei ein weiteres erstes Spannband an einer ersten Seite der weiteren Zwischenplatte angebracht ist und ein weiteres zweites Spannband an einer der ersten Seite gegenüberliegenden zweiten Seite der weiteren Zwischenplatte angebracht ist, wobei Enden des ersten und des zweiten weiteren Spannbands jeweils mit dem Fahrzeugrahmen verbindbar sind, sodass der Kryobehälter mittels der Zwischenplatte an einer ersten Stelle an den Fahrzeugrahmen gespannt werden kann und mittels der weiteren Zwischenplatte an einer zweiten Stelle an den Fahrzeugrahmen gespannt werden kann.

Um die Spannbänder nicht unmittelbar am Fahrzeug anzubringen und um einen stabilen Sitz für den Kryobehälter unabhängig von der Form des Fahrzeugrahmens vorzusehen, kann das Befestigungssystem ferner zumindest eine am Fahrzeugrahmen montierbare L-förmige Konsole umfassen, an welche der Kryobehälter anlegbar ist und in welche die Spannbänder einhängbar sind.

Vorteilhafte und nicht einschränkende Ausführungsformen der Erfindung werden nachfolgend anhand der Zeichnungen näher erläutert.
Figur 1 zeigt ein erfindungsgemäßes Befestigungssystem, mit dem ein Kryobehälter an einem Fahrzeug montiert ist.
Figur 2 zeigt das Befestigungssystem von Figur 1 im Detail.

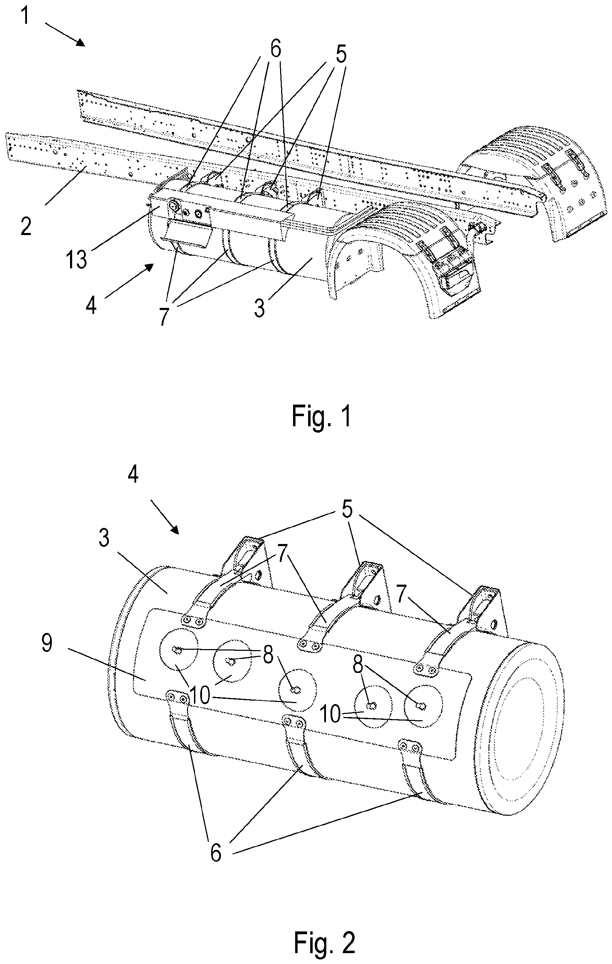

Figur 1 zeigt ein Fahrzeug 1, auf dessen Fahrzeugrahmen 2 ein Kryobehälter 3 mittels eines Befestigungssystems 4 montiert ist. Weiters kann ein zusätzlicher Kryobehälter (nicht dargestellt) am Fahrzeugrahmen 2 gegenüber dem ersten Kryobehälter 3 montiert werden, was mittels eines gleich ausgestalteten Befestigungssystems 4 oder mittels eines anderen Befestigungssystems wie aus dem Stand der Technik bekannt erfolgen kann.

Der Kryobehälter 3 speichert Fluid, beispielsweise verflüssigtes Erdgas, welches dem Fachmann auch als LNG ("Liquid Natural Gas") bekannt ist. Das Fluid liegt bis zu einem Füllstand in flüssiger Form vor, darüber im gasförmigen Zustand. Wird der Kryobehälter 3 in Verbindung mit einem Kraftfahrzeug 1 eingesetzt, kann das gespeicherte Fluid beispielsweise als Treibstoff für einen Motor des Kraftfahrzeugs 1 dienen. Der Kryobehälter 3 könnte jedoch auch in anderen Einsatzgebieten vorgesehen werden, sodass das Befestigungssystem 4 den Kryobehälter 3 nicht an einem Fahrzeugrahmen 2, sondern an einer anderen Struktur hält, beispielsweise einer Wand.

Wie dargestellt weist der Kryobehälter 3 einen zylindrischen Mantel M auf. Um den Kryobehälter 3 am Fahrzeugrahmen 2 bzw. an Tragkonsolen 5 des Fahrzeugrahmens 2 zu befestigen, umfasst das Befestigungssystem 4 Spannbänder 6, 7, die um den zylindrischen Mantel M des Kryobehälters 3, d.h. in Umfangsrichtung um den Mantel M, verlaufen. Im Beispiel von Figur 1 sind in Längsrichtung L des Mantels M drei Tragkonsolen 5 am Fahrzeugrahmen 2 montiert, auf denen der Kryobehälter 3 zumindest teilweise aufliegt bzw. anliegt. Die Spannbänder 6, 7 sind jeweils mit einem Ende an den Tragkonsolen 5 verbunden und spannen den Kryobehälter 3 somit am Fahrzeugrahmen 2 fest.

Die Tragkonsolen 5 weisen üblicherweise eine L-Form auf, d.h. sie sind derart ausgestaltet, dass sie den Kryobehälter 3 teilweise auch in einer vertikalen Richtung unterstützen. In der Regel stützen sie den Kryobehälter 3 aber nicht am tiefstgelegenen Punkt des Mantels M ab, da dies zu einem zu großen Raumverlust führen würde. In weiteren, nicht dargestellten Ausführungsformen können die Tragkonsolen 5 jedoch auch entfallen, sodass die Spannbänder 6, 7 direkt am Fahrzeugrahmen 2 eingehängt werden können.

Wie in Figur 1 angedeutet und in Figur 2 im Detail gezeigt, ist der Kryobehälter 3 derart ausgestaltet, dass aus dem Mantel M Anschlüsse 8 ragen, zum Beispiel für Ventile, Armaturen oder Instrumente wie Wärmetauscher. Im Allgemeinen können die Anschlüsse 8 Rohrdurchführungen durch den Mantel M sein. Die Spannbänder 6, 7 können dadurch nicht ohne weitere Vorkehrungen in Umfangsrichtung um den Mantel M geführt werden.

Figur 2 zeigt das Befestigungssystem 4 im Detail. Demgemäß umfasst das Befestigungssystem 4 eine Zwischenplatte 9 mit zumindest einer Ausnehmung 10 für den zumindest einen Anschluss 8. Im Beispiel von Figur 2 hat die Zwischenplatte 9 fünf Ausnehmungen 10 für fünf Anschlüsse 8. Die Ausnehmungen 10 sind beispielsweise kreisrund, können aber auch andersförmig sein wie beispielsweise oval oder rechteckig, insbesondere um eine gemeinsame Ausnehmung 10 für zwei oder mehr knapp nebeneinander liegende Anschlüsse 8 zu bilden. Im Allgemeinen kann die Zwischenplatte 9 genau eine, zumindest eine oder auch zumindest zwei Ausnehmungen 10 aufweisen.

Im Beispiel von Figur 2 hat die Zwischenplatte 9 eine Länge, die mehr als die Hälfte der Länge des Mantels M in Längsrichtung L beträgt, bevorzugt mehr als 80 % der Länge des Mantels M. Die Länge der Zwischenplatte 9 kann aber auch geringer sein, insbesondere dann, wenn das Befestigungssystem 4 mehr als eine Zwischenplatte 9 umfasst. Die Zwischenplatte 9 hat eine Breite, die beispielsweise weniger als 25 % des Umfangs des Mantels M beträgt, bevorzugt weniger als 15 % des Umfangs. Die Zwischenplatte 9 kann zudem eine Krümmung aufweisen, die im Wesentlichen der Krümmung des Mantels M entspricht. Die Zwischenplatte 9 ist bevorzugt aus Edelstahl gefertigt, könnte aber auch aus anderen Materialen mit erforderlichen Festigkeits- und Belastbarkeitswerten gefertigt werden.

Die Zwischenplatte 9 weist eine erste Seite und eine der ersten Seite gegenüberliegende zweite Seite auf. Im montierten Zustand liegen die beiden Seiten an verschiedenen Stellen des Umfangs des Mantels M. Die genannten Spannbänder 6, 7 sind derart angeordnet, dass zumindest ein erstes Spannband 6 mit einem Ende an der ersten Seite der Zwischenplatte 9 angebracht ist und zumindest ein zweites Spannband 7 mit einem Ende an der zweiten Seite.

Die Spannbänder 6, 7 sind beispielsweise aus Edelstahl gefertigt, können jedoch auch aus einem anderen Material bestehen, welches bei kryogenen Temperaturen geeignete Festigkeits- und Belastbarkeitswerte aufweist. Die Breite der Spannbänder in Längsrichtung des Mantels M kann je nach Anforderung gewählt werden.

Die Enden der ersten bzw. zweiten Spannbänder 6, 7, die nicht mit der Zwischenplatte 9 verbunden sind, können folglich an den Tragkonsolen 5 bzw. direkt am Fahrzeugrahmen 2 angebracht werden, um den Kryobehälter 3 am Fahrzeugrahmen 2 zu montieren. In einem ersten Abschnitt entlang des Umfangs liegt somit das erste Spannband 6 am Mantel M an, an einem darauffolgenden zweiten Abschnitt liegt die Zwischenplatte 9 am Mantel M an, an einem darauffolgenden dritten Abschnitt liegt das zweite Spannband 7 am Mantel M an und an einem darauffolgenden vierten Abschnitt liegt die Tragkonsole 5 bzw. der Fahrzeugrahmen 2 am Mantel M an, wobei der erste Abschnitt wiederum dem vierten Abschnitt folgt.

Wie in Figur 2 dargestellt, sind an der ersten Seite in Längsrichtung des Mantels M drei erste Spannbänder 6 angebracht und an der zweiten Seite in Längsrichtung des Mantels M drei zweite Spannbänder 7. Jedem ersten Spannband 6 liegt ein zweites Spannband 7 in Umfangsrichtung des Mantels M im Wesentlichen gegenüber. Alternativ könnte vorgesehen sein, dass beispielsweise drei erste Spannbänder 6 und nur zwei zweite Spannbänder 7 vorgesehen sind. Hierbei können beispielsweise die zwei zweiten Spannbänder 7 jeweils einem der ersten Spannbänder 6 gegenüberliegen oder die zweiten Spannbänder 7 könnten an der zweiten Seite der Zwischenplatte 9 in Längsrichtung des Mantels M jeweils zwischen zwei ersten Spannbändern 6 angebracht sein.

Im Allgemeinen kann daher vorgesehen werden, dass erste und zweite Spannbänder 6, 7 einander nicht direkt gegenüberliegen. Auch kann das Befestigungssystem 4 im Allgemeinen auch eine unterschiedliche Anzahl von ersten Spannbändern 6 und zweiten Spannbändern 7 aufweisen.

Die Verbindung zwischen Spannbändern 6, 7 und Zwischenplatte 9 kann auf unterschiedlichste Art ausgeführt werden. Im Beispiel von Figur 2 sind die Spannbänder 6, 7 unlösbar mit der Zwischenplatte 9 verbunden, was mittels Nieten durchgeführt werden kann. Als Alternative könnten die Spannbänder 6, 7 auch mit der Zwischenplatte 9 verschweißt werden, um zwischen diesen eine unlösbare Verbindung herzustellen. In wiederum anderen Ausführungsformen könnte die Zwischenplatte 9 auch einstückig mit den Spannbändern 6, 7 ausgebildet sein.

Alternativ könnte die Verbindung zwischen Spannbändern 6, 7 und Zwischenplatte 9 auch lösbar ausgebildet sein. Zu diesem Zweck könnte die Zwischenplatte 9 entlang der ersten Seite eine Nut aufweist, in welcher das erste Spannband 6 eingehängt ist. In diesem Fall könnte das erste Spannband 6 beispielsweise mittels einer Befestigungsschraube in der Nut eingehängt sein. Auch an der zweiten Seite könnte die Zwischenplatte 9 eine Nut aufweist, in welcher das zweite Spannband 7 eingehängt ist. Im Allgemeinen können an der ersten und zweiten Seite unterschiedliche lösbare oder unlösbare Verbindungen ausgeführt werden. Auch ist es möglich, dass an der ersten Seite eine lösbare Verbindung vorgesehen wird und an der zweiten Seite eine unlösbare Verbindung.

In der Ausführungsform von Figur 2 umfasst das Befestigungssystem 4 eine einzige Zwischenplatte 9. Alle ersten und zweiten Spannbänder 6, 7, die den Kryobehälter 3 am Fahrzeugrahmen 2 festspannen, sind an der einzigen Zwischenplatte 9 angebracht. Als Alternative könnte jedoch auch vorgesehen sein, dass mehr als eine Zwischenplatte 9 vorgesehen ist. Beispielsweise könnten zwei oder mehr Zwischenplatten 9 vorgesehen sein. Jede dieser Zwischenplatten 9 weist eine erste und eine zweite Seite auf, wobei zumindest ein erstes Spannband 6 auf der ersten Seite der Zwischenplatte 9 angebracht ist und zumindest ein zweites Spannband 7 auf der zweiten Seite angebracht ist. Bevorzugt hat jede der Zwischenplatten 9 eine Ausnehmung 10 für einen der Anschlüsse 8.

In einer Ausführungsform könnte für jedes Paar aus gegenüberliegenden ersten und zweiten Spannbändern 6, 7 eine eigene Zwischenplatte 9 vorgesehen werden. Die Zwischenplatte 9 kann dabei so klein wie möglich ausgestaltet werden. Beispielsweise kann in diesem Fall die Zwischenplatte 9 als einfacher Ring ausgebildet sein, der um den Anschluss 8 gelegt ist. Diese Ausführungsform kann insbesondere dann eingesetzt werden, wenn zum Zeitpunkt der Herstellung der Zwischenplatte 9 nicht bekannt ist, an welcher Stelle sich die Anschlüsse 8 befinden, da dies die Fertigung einer einzelnen Zwischenplatte 9 mit Ausnehmungen 10 erschweren würde.

Derartige Zwischenplatten 9, die jeweils nur mit einem ersten und einem zweiten Spannband 6, 7 verbunden sind, eignen sich besonders in Kombination mit Spannbändern ohne Zwischenplatten 9. Wird bei der Montage des Kryobehälters 3 and den Fahrzeugrahmen 2 beispielsweise festgestellt, dass die Anordnung einer ersten Tragkonsole 5 erlaubt, ein reguläres Spannband ohne Zwischenplatte 9 zu verwenden, wird dieses reguläre Spannband verwendet. Erlaubt die Anordnung einer zweiten Tragkonsole nicht, ein reguläres Spannband zu verwenden, da ein Anschluss 8 das reguläre Spannband blockieren würde, kann für diese Tragkonsole 5 ein erfindungsgemäßes Befestigungssystem 4 mit Zwischenplatte 9 verwendet werden. Somit können reguläre Spannbänder mit dem Befestigungssystem 4 wie oben beschrieben kombiniert werden.

Zurückkommend auf Figur 1 ist weiters dargestellt, dass über die Zwischenplatte 9 bzw. die von dieser umgriffenen Anschlüsse 8 eine Abdeckung 13 vorgesehen werden kann. Die Abdeckung 13 liegt hierbei bevorzugt zumindest teilweise über der Zwischenplatte 9. Die Spannbänder 6, 7 überdecken die Abdeckung 13 nicht und liegen neben bzw. unter dieser. Im Bereich der Abdeckung 13 wird somit ein Raumgewinn erzielt, da die Spannbänder 6, 7 nicht oberhalb der Abdeckung 13 liegen.

In alternativen Ausführungsformen kann vorgesehen werden, dass die Zwischenplatte 9 keine Ausnehmungen 10 aufweist. In diesen Ausführungsformen tritt zumindest im Bereich der Zwischenplatte 9 keine Leitung durch den Mantel M des Kryobehälters 3. Die Zwischenplatte 9 bringt dennoch den Vorteil, dass die Kraftverteilung im Vergleich zu durchgängigen Spannbändern verbessert ist. Weiters lässt sich die Zwischenplatte 9 leicht unter Leitungen und Armaturen führen, welche beispielsweise an den Kryobehälter 3 angeschlossen sind. Somit kann ein umständliches einfädeln der Spannbänder unter die Leitungen bzw. Armaturen verhindert werden, da die Zwischenplatte 9 bereits vor dem Anschließen der Spannbänder unter die Leitungen bzw. Armaturen eingebracht werden kann.

## Patentansprüche

1. Befestigungssystem (4) für einen Kryobehälter (3), welcher einen zylindrischen Mantel (M) umfasst, wobei das Befestigungssystem zumindest ein Spannband (6, 7) umfasst, um den Kryobehälter (3) an einen Fahrzeugrahmen (2) zu spannen,
**dadurch gekennzeichnet, dass**
das Befestigungssystem (4) eine Zwischenplatte (9) umfasst, wobei ein erstes Spannband (6) an einer ersten Seite der Zwischenplatte (9) angebracht ist und ein zweites Spannband (7) an einer der ersten Seite gegenüberliegenden zweiten Seite der Zwischenplatte (9) angebracht ist, und wobei der Zwischenplatte (9) gegenüberliegende Enden des ersten und des zweiten Spannbands (6, 7) jeweils mit dem Fahrzeugrahmen (2) verbindbar sind, um den Kryobehälter (3) an den Fahrzeugrahmen (2) zu spannen.

2. Befestigungssystem (4) nach Anspruch 1, wobei der Kryobehälter (3) zumindest einen aus dem Mantel (M) ragenden Anschluss (8) umfasst und die Zwischenplatte zumindest eine Ausnehmung (10) für den zumindest einen Anschluss (8) aufweist.

3. Befestigungssystem (4) nach Anspruch 1 oder 2, wobei das erste Spannband (6) an der Zwischenplatte (9) in Umfangsrichtung des Mantels (M) im Wesentlichen gegenüber dem zweiten Spannband (7) angebracht ist.

4. Befestigungssystem (4) nach einem der Ansprüche 1 bis 3, wobei zumindest zwei erste Spannbänder (6) an der ersten Seite angebracht sind und zumindest zwei zweite Spannbänder (7) an der zweiten Seite angebracht sind, und wobei bevorzugt jeweils ein erstes Spannband (6) an der Zwischenplatte (9) in Umfangsrichtung des Mantels (M) gegenüber einem zweiten Spannband (7) angebracht ist.

5. Befestigungssystem (4) nach Anspruch 2 in Verbindung mit Anspruch 3 oder 4, wobei zumindest eine der Ausnehmungen (10) in der Zwischenplatte (9) zwischen dem ersten Spannband (6) und dem dem ersten Spannband (6) gegenüberliegenden zweiten Spannband (7) angeordnet ist.

6. Befestigungssystem (4) nach einem der Ansprüche 1 bis 5, wobei die Spannbänder (6, 7) aus Edelstahl gefertigt sind.

7. Befestigungssystem (4) nach einem der Ansprüche 1 bis 6, wobei das erste Spannband (6) unlösbar an der ersten Seite der Zwischenplatte (9) angebracht ist.

8. Befestigungssystem (4) nach einem der Ansprüche 1 bis 6, wobei die Zwischenplatte (9) entlang der ersten Seite eine Nut aufweist, in welcher das erste Spannband (6) eingehängt ist, und wobei die Zwischenplatte (9) bevorzugt an der zweiten Seite eine weitere Nut aufweist, in welcher das zweite Spannband (7) eingehängt ist, wobei das erste Spannband (6) bevorzugt mittels einer Befestigungsschraube in der Nut eingehängt ist.

9. Befestigungssystem (4) nach einem der Ansprüche 1 bis 8, ferner umfassend zumindest eine weitere Zwischenplatte (9), wobei ein weiteres erstes Spannband (6) an einer ersten Seite der weiteren Zwischenplatte (9) angebracht ist und ein weiteres zweites Spannband (7) an einer der ersten Seite gegenüberliegenden zweiten Seite der weiteren Zwischenplatte (9) angebracht ist, wobei Enden des ersten und des zweiten weiteren Spannbands (6, 7) jeweils am Fahrzeugrahmen (2) angebracht sind, sodass der Kryobehälter (3) mittels der Zwischenplatte (9) an einer ersten Stelle an den Fahrzeugrahmen (2) gespannt werden kann und mittels der weiteren Zwischenplatte (9) an einer zweiten Stelle an den Fahrzeugrahmen (2) gespannt werden kann.

10. Befestigungssystem (4) nach einem der Ansprüche 1 bis 9, ferner umfassend zumindest eine am Fahrzeugrahmen (2) montierbare L-förmige Konsole (5), an welche der Kryobehälter (3) anlegbar ist und in welche die der Zwischenplatte (9) abgewandten Enden der Spannbänder (6, 7) einhängbar sind.

## Claims

1. A fastening system (4) for a cryogenic container (3) comprising a cylindrical jacket (M), the fastening system comprising at least one tensioning strap (6, 7) for tensioning the cryogenic container (3) to a vehicle frame (2),
**characterised in that**
the fastening system (4) comprises an intermediate plate (9), wherein a first tensioning strap (6) is attached to a first side of the intermediate plate (9) and a second tensioning strap (7) is attached to a second side of the intermediate plate (9) opposite to the first side , and wherein ends of the first and second tensioning straps (6, 7) opposite to the intermediate plate (9) are each connectable to the vehicle frame (2) to tension the cryogenic container (3) to the vehicle frame (2).

2. Fastening system (4) according to claim 1, wherein the cryogenic container (3) comprises at least one connection (8) projecting from the jacket (M) and the intermediate plate has at least one recess (10) for the at least one connection (8).

3. Fastening system (4) according to claim 1 or 2, wherein the first tension strap (6) is attached to the intermediate plate (9) in the circumferential direction of the jacket (M) substantially opposite to the second tension strap (7).

4. Fastening system (4) according to any one of claims 1 to 3, wherein at least two first tensioning straps (6) are attached to the first side and at least two second tensioning straps (7) are attached to the second side, and wherein preferably in each case a first tensioning strap (6) is attached to the intermediate plate (9) in the circumferential direction of the jacket (M) opposite to a second tensioning strap (7).

5. Fastening system (4) according to claim 2 in conjunction with claim 3 or 4, wherein at least one of the recesses (10) is arranged in the intermediate plate (9) between the first tensioning strap (6) and the second tensioning strap (7) opposite to the first tensioning strap (6).

6. Fastening system (4) according to any one of claims 1 to 5, wherein the tensioning straps (6, 7) are made of stainless steel.

7. Fastening system (4) according to any one of claims 1 to 6, wherein the first tension strap (6) is non-releasably attached to the first side of the intermediate plate (9).

8. Fastening system (4) according to any one of claims 1 to 6, wherein the intermediate plate (9) has a groove along the first side in which the first tensioning strap (6) is suspended, and wherein the intermediate plate (9) preferably has a further groove on the second side in which the second tensioning strap (7) is suspended, wherein the first tensioning strap (6) is preferably suspended in the groove by means of a fastening screw.

9. A fastening system (4) according to any one of claims 1 to 8, further comprising at least one further intermediate plate (9), wherein a further first tensioning strap (6) is attached to a first side of the further intermediate plate (9) and a further second tensioning strap (7) is attached to a second side of the further intermediate plate (9) opposite to the first side, wherein ends of the first and second further tightening straps (6, 7) are respectively attached to the vehicle frame (2) so that the cryogenic container (3) can be clamped to the vehicle frame (2) at a first location by means of the intermediate plate (9) and can be clamped to the vehicle frame (2) at a second location by means of the further intermediate plate (9).

10. Fastening system (4) according to one of the claims 1 to 9, further comprising at least one L-shaped bracket (5) which can be mounted on the vehicle frame (2) and on which the cryogenic container (3) can be placed and into which the ends of the tensioning straps (6, 7) facing away from the intermediate plate (9) can be suspended.

## Revendications

1. Système de fixation (4) pour un récipient cryogénique (3) qui comprend une enveloppe cylindrique (M), lequel système de fixation comprend au moins une sangle de serrage (6, 7) pour serrer le récipient cryogénique (3) sur un châssis de véhicule (2),
**caractérisé en ce que**
ce système de fixation (4) comprend une plaque intermédiaire (9), une première sangle de serrage (6) étant montée sur une première face de la plaque intermédiaire (7) et une deuxième sangle de serrage (7) étant montée sur une deuxième face opposée à la première face de la plaque intermédiaire (9), et les extrémités de la première et de la deuxième sangle de serrage (6, 7) opposées à la plaque intermédiaire pouvant être reliées chacune avec le châssis de véhicule (2) pour serrer le récipient cryogénique (3) sur le châssis de véhicule (2).

2. Système de fixation (4) selon la revendication 1, dans lequel le récipient cryogénique (3) comprend au moins un raccordement (8) faisant saillie hors de l'enveloppe (M) et la plaque intermédiaire présente au moins une cavité (10) pour l'au moins un raccordement (8).

3. Système de fixation (4) selon la revendication 1 ou 2, dans lequel la première sangle de serrage (6) est montée sur la plaque intermédiaire (9) dans la direction périphérique de l'enveloppe (M) sensiblement à l'opposé de la deuxième sangle de serrage (7).

4. Système de fixation (4) selon une des revendications 1 à 3, dans lequel au moins deux premières sangles de serrage (6) sont montées sur la première face et au moins deux deuxièmes sangles de serrage (7) sont montées sur la deuxième face et dans lequel, de préférence, une première sangle de serrage (6) est montée sur la plaque intermédiaire (9) dans la direction périphérique de l'enveloppe (M) à l'opposé d'une deuxième sangle de serrage (7).

5. Système de fixation (4) selon la revendication 2 en lien avec la revendication 3 ou 4, dans lequel au moins une des cavités (10) est située dans la plaque intermédiaire (9) entre la première sangle de serrage (6) et la deuxième sangle de serrage (7) opposée à la première sangle de serrage (6).

6. Système de fixation (4) selon une des revendications 1 à 5, dans lequel les sangles de serrage (6, 7) sont fabriquées en acier inoxydable.

7. Système de fixation (4) selon une des revendications 1 à 6, dans lequel la première sangle de serrage (6) est montée à demeure sur la première face de la plaque intermédiaire (9).

8. Système de fixation (4) selon une des revendications 1 à 6, dans lequel la plaque intermédiaire (9) présente le long de la première face une rainure dans laquelle la première sangle de serrage (6) est accrochée et dans lequel la plaque intermédiaire (9) présente de préférence sur la deuxième face une rainure supplémentaire dans laquelle la deuxième sangle de serrage (7) est accrochée, la première sangle de serrage (6) étant de préférence accrochée dans la rainure au moyen d'une vis de fixation.

9. Système de fixation (4) selon une des revendications 1 à 8 comprenant en outre au moins une plaque intermédiaire supplémentaire (9), dans lequel une première sangle de serrage supplémentaire (6) est montée sur une première face de la plaque intermédiaire supplémentaire (9) et une deuxième sangle de serrage supplémentaire (7) est montée sur une deuxième face opposée à la première face de la plaque intermédiaire supplémentaire (9), les extrémités des première et deuxième sangles de serrage supplémentaires (6, 7) étant montées chacune sur le châssis de véhicule (2) de sorte que le récipient cryogénique (3) peut être serré à un premier endroit sur le châssis de véhicule (2) au moyen de la plaque intermédiaire (9) et à un deuxième endroit sur le châssis de véhicule (2) au moyen de la plaque intermédiaire supplémentaire (9).

10. Système de fixation (4) selon une des revendications 1 à 9, comprenant en outre au moins une console en forme de L (5) pouvant être montée sur le châssis de véhicule (2) sur laquelle le récipient cryogénique (3) peut être posé et dans laquelle les extrémités des sangles de serrage (6, 7) opposées à la plaque intermédiaire (9) peuvent être accrochées.
